# EUROPÄISCHE PATENTSCHRIFT

(11) **EP 0 431 505 B1**
(45) Veröffentlichungstag und Bekanntmachung des Hinweises auf die Patenterteilung: **08.06.1994**
(21) Anmeldenummer: 90123043.3
(22) Anmeldetag: 01.12.1990
(51) Int. Cl.: F16J 15/34

(54) **Gasgesperrte, kontaktlose Dichtungsanordnung für eine Welle**
Non-contacting gas sealing device for a shaft
Joint sans-contact étanche au gaz, pour arbre tournant

(30) Priorität: 06.12.1989 DE 3940258
(43) Veröffentlichungstag der Anmeldung: 12.06.1991
(73) Patentinhaber: Pacific Wietz GmbH + Co. KG, 44388 Dortmund (DE)
(72) Erfinder: Victor, Karl-Heinz, W-4620 Castrop-Rauxel (DE); Laarmann, Hans-Wilhelm, Dipl.-Ing., W-4700 Hamm 3 (DE); Dedeken, Ralf, Dr.-Ing., W-5810 Witten-Heven (DE); Maser, Gustav, W-4600 Dortmund 50 (DE)
(74) Vertreter: Andrejewski, Walter

(56) Entgegenhaltungen:
- DE-U- 8 628 774
- GB-A- 2 197 396
- US-A- 3 529 838
- hydraulics & pneumatics, vol. 8, no. 42, 31 August 1989, Cleveland, OH, USA, Seiten 57-59; W. Byars: "Sealing Seminar"

## Beschreibung

Die Erfindung betrifft eine gasgesperrte Gleitringdichtung für eine Welle, - mit Dichtungsgehäuse, in dem Dichtungsgehäuse angeordnetem Stator-Dichtungsring und auf der Welle angeordnetem, wellenfesten Rotor-Dichtungsring, wobei die beiden Dichtungsringe mit ihren Dichtungsstirnflächen unter Zwischenschaltung der Gassperrung gegeneinander mit einem Dichtungsspalt arbeiten, wobei der Rotor-Dichtungsring und der Stator-Dichtungsring aus einem der Werkstoffe oder Gruppe "Wolframcarbid, Siliciumcarbid, Silicium/Siliciumcarbid-Compound, Titancarbid" oder Paarungen davon bestehen mit einem Porenvolumen von unter 1% sowie einer Oberflächenrauhigkeit von unter 0,3 »m (Ra) vorzugsweise von unter 0,03 »m (Ra) und wobei der Stator-Dichtungsring gegenüber einem wellenseitigen Zylinderteil des Dichtungsgehäuses im Betriebszustand und unter vorgegebenem Betriebsdifferenzdruck einen Funktionsringspalt aufweist, der durch einen in einer Nut angeordneten abdichtenden O-Ring aus Gummi oder Kunststoff abgedichtet und mit einer durch zumindest eine Andrückfeder vorgegebenen Andrückkraft gegen die Gassperrung gedrückt ist. Bei einer solchen Dichtungsanordnung ist zu unterscheiden zwischen dem beschriebenen Funktionsringspalt und dem Montageringspalt, der konstruktiv vorgegeben ist. Der Funktionsringspalt entwickelt sich aus dem Montageringspalt durch sogenannte Einfederung im montierten Zustand unter dem Einfluß des abzudichtenden Betriebsdifferenzdruckes. - Es versteht sich, daß die Auslegung einer solchen gasgesperrten, kontaktlosen Dichtungsanordnung unter Berücksichtigung der speziellen Dichtungsaufgaben im übrigen nach der herrschenden Baulehre erfolgt, und zwar unter Anwendung der entsprechenden Methoden, die die Ingenieurwissenschaft seit 1925 zu diesem Thema entwickelt hat. Geeignete Hartdichtungswerkstoffe sind z.B. in der Literaturstelle VDI-Zeitschrift 102 (1960), Nr. 18, Seiten 728 bis 732, beschrieben.

Bei der bekannten gattungsgemäßen Dichtungsanordnung GB-A-2 197 396 sind die Anordnung und die Auslegung so getroffen, daß der Verwindungsverformung entgegenwirkende Momente aus der Druckverteilung im Dichtungsspalt, d.h. in der Gassperrung, entstehen. Zwingend notwendig dazu ist, daß die Vertiefungen förderwirksame, eine Pumpwirkung erzeugende Spiralrillen sind und daß die Spiralrillen, die zumindest im Rotor-Dichtungsring angeordnet sind, lediglich von eim Umfang der Dichtungsstirnfläche ausgehen sowie an einem Damm oder Steg enden, wobei in bezug auf die Spiralrillentiefe, in bezug auf das sogenannte Stegbreitenverhältnis sowie in bezug auf das Gleichgewicht bestimmte zahlenmäßige Parameter eingehalten werden müssen.

Die Tatsache, daß eine temperaturbedingte und differenzdruckbedingte Verwindungsverformung des Stator-Dichtungsringes zugelassen und durch Einrichtung des Flächenträgheitsmomentes des Stator-Dichtungsringes sogar provoziert wird, die durch die beschriebene Druckverteilung in der Gassperrung wieder zurückgestellt werden soll, hat einen störenden Nachteil: Die beschriebene Verwindung bewirkt nach den Gesetzen der Mechanik, daß der Montageringspalt beachtlich größer sein muß als derjenige Funktionsringspalt, der sich einstellt, wenn der Stator-Dichtungsring seine Verwindung erfahren hat, und zwar ohne Rücksicht auf die Rückstellung dieser Verwindung durch die Druckverteilung in der Gassperrung. Auf die Rückstellung kommt es für die Bemessung des Montageringspaltes und das Verhältnis Montageringspalt/Funktionsringspalt bei verschiedenen Betriebszuständen der Dichtungsanordnung nicht an, weil die temperaturbedingte Verformung und die vom Betriebszustand der Dichtungsanordnung abhängige Rückstellung nicht gleichzeitig erfolgen, andererseits aber stets sichergestellt sein muß, daß ein Kontakt an den Dichtungsstirnflächen des Rotor-Dichtungsringes sowie des StatorDichtungsringes nicht geschieht. In der Praxis liegt bei allen üblichen Durchmesserverhältnissen von Dichtungsanordnungen des beschriebenen Aufbaus die Spaltdicke des Montageringspaltes im Bereich von 0,4 oder 0,5 mm. Diese Ringspaltdicke muß von dem aus Gummi oder Kunststoff bestehenden O-Ring auch bei anstehendem Betriebsdifferenzdruck beherrscht werden, und zwar sowohl dann, wenn sich im Anfahrzustand die endgültige Temperaturverteilung noch nicht eingestellt hat, als auch dann, wenn nach endgültiger Einstellung der Temperaturverteilung die angestrebte Rückstellung mehr oder weniger vollständig erfolgt. Folglich muß bei der bekannten Ausführungsform der O-Ring in bezug auf seine Werkstoffhärte in Shore so ausgelegt werden, daß er durch den Betriebsdifferenzdruck nicht in einen Ringspalt entsprechend dem Montageringspalt von etwa 0,4 oder 0,5 mm hineingedrückt wird und durch sogenannte Extrusion vorzeitig zerstört wird. Der O-Ring ist bei der bekannten Ausführungsform entsprechend hart ausgelegt. Seine Werkstoffhärte beträgt 90 und mehr Shore A nach DIN 53 505. Nichtsdestoweniger sind mit der bekannten Ausführungsform Betriebsdifferenzdrücke von über 80 oder maximal 100 bar praktisch nicht beherrschbar, wenn die Anwendung die üblichen Standzeiten von mehreren tausend Betriebsstunden für die Dichtungsanordnung insgesamt verlangt. Andererseits verlangt die Praxis in zunehmendem Maße Dichtungsanordnungen des eingangs beschriebenen grundsätzlichen Aufbaus auch für extrem hohe Betriebsdifferenzdrücke, die weit über 100 bar liegen. Hinzu kommt bei der bekannten Ausführungsform eine Funktionsbeeinträchtigung der Dichtungsanordnung insgesamt durch den O-Ring großer Härte vor dem Ringspalt zwischen Stator-Dichtungsring und Zylinderteil des Dichtungsgehäuses. Tatsächlich rotieren bei einer Dichtungsanordnung des beschriebenen Aufbaus die Welle mit dem Rotor-Dichtungsring nie vollkommen rund und nie vollkommen koaxial zu dem Stator-Dichtungsring mit den angeschlossenen Gehäusebauteilen. Daraus können Vibrationen resultieren, die dem Stator-Dichtungsring induziert werden. Insoweit muß in dem beschriebenen Funktionsringspalt (gleichgültig, wie groß er sich im Betrieb eingestellt hat), ein gewisses Spiel verwirklicht sein, ohne daß die Dichtwirkung beeinträchtigt wird. Ist ein O-Ring mit großer Werkstoffhärte verwirklicht, so folgt er der induzierten Bewegung des Stator-Dichtungsringes nicht und beeinträchtigt er das beschriebene Spiel mit nachteiligem Einfluß auf die Dichtwirkung sowohl in dem Ringspalt zwischen dem beschriebenen Zylinderteil und dem Stator-Dichtungsring als auch in der Gassperrung. Im übrigen kann es zu nachteiligen Kontakten zwischen den Dichtungsstirnflächen am Rotor-Dichtungsring und am Stator-Dichtungsring kommen.

Der Erfindung liegt die Aufgabe zugrunde, eine gasgesperrte, kontaktlose Dichtungsanordnung des eingangs beschriebenen Aufbaus so weiter auszubilden, daß sie für wesentlich höhere Drücke als die bekannte Ausführungsform, z. B. für Betriebsdifferenzdrücke bis zu 300 oder sogar bis zu 500 bar, einsetzbar ist, und zwar bei hoher Dichtwirkung und großer Standzeit.

Zur Lösung dieser Aufgabe lehrt die Erfindung, daß der Stator-Dichtungsring ein so großes Flächenträgheitsmoment aufweist, daß die Spaltdicke des Funktionsringspaltes zwischen dem wellenseitigen Zylinderteil des Dichtungsgehäuses und dem Stator-Dichtungsring im Betriebszustand und unter Betriebsdifferenzdruck mit der konstruktiv vorgegebenen Spaltdicke des Montageringspaltes zwischen Zylinderteil und Stator-Dichtungsring in allen Betriebszuständen praktisch übereinstimmt und kleiner ist als 0,4 mm, vorzugsweise kleiner ist als 0,3 mm, und daß der abdichtende O-Ring zusätzlich als Ausgleichszentrierring für den Stator-Dichtungsring ausgelegt ist und dazu eine Werkstoffhärte aufweist, die größer als der Extrusionsgrenzwert der Werkstoffhärte bei der angegebenen Spaltweite und dem vorgegebenen Betriebsdifferenzdruck und kleiner ist als die Werkstoffhärte von 90 Shore A nach DIN 53 505. Vorzugweise ist die Werkstoffhärte sogar kleiner als 80 Shore A nach der angegebenen Norm. - Mit anderen Worten sind erfindungsgemäß die Anordnung und Auslegung so getroffen, daß sich die Orientierung der Dichtungsstirnflächen vom Rotor-Dichtungsring und Stator-Dichtungsring im Betrieb nicht ändern, vorzugsweise stets parallel bleibt.

Bei der erfindungsgemäßen Dichtungsanordnung braucht in bezug auf die Auslegung der Vertiefungen keine Rücksicht genommen werden auf die Erzeugung irgendwelcher Rückstellkräfte. Folglich können die Vertiefungen und die Dichtungsstirnflächen an dem Rotor-Dichtungsring und an dem Stator-Dichtungsring so ausgelegt werden, daß eine optimale Dichtwirkung durch Gassperrung erreicht wird. Dazu können die Vertiefungen als förderwirksame Spiralrillen ausgelegt sein. In diesem Zusammenhang besteht aber auch die Möglichkeit, die Vertiefungen als druckwirksame Einsenkungen mit Staukante auszuführen.

Spiralrillen sind in gasdynamischer Hinsicht Elemente, die eine definierte Förderung bewirken. Die Förderung kann ausgenutzt werden, um dem Leckstrom, der die einleitend angesprochene Leckrate bestimmt, entgegen zu wirken. Vertiefungen mit einer Staukante sind demgegenüber in gasdynamischer Hinsicht Elemente, die einer definierten Förderung des Gases entgegenwirken, nämlich eine Stauung bewirken. In beiden Fällen läßt sich die Dichtwirkung optimieren und ist die Optimierung nicht dadurch beeinträchtigt, daß die Rückstellkräfte im Rahmen besonderer Gleichgewichtsbedingungen erzeugt werden müssen.

Nach bevorzugter Ausführungsform besitzt der Stator-Dichtungsring ein Flächenträgheitsmoment, welches temperaturbedingten Verwindungsverformungen seiner Dichtungsstirnfläche verhindert. Ein solches Flächen-trägheitsmoment kann mit den modernen computergestützen Rechenmethoden der technischen Mechanik unschwer ermittelt werden. Ra bezeichnet den Mittenrauhigkeitswert nach DIN 4768. Nach bevorzugter Ausführungsform der Erfindung weisen zusätzlich die Dichtungsstirnflächen bei Zimmertemperatur und bei einem Temperaturgradienten von Null eine Ebenheit von 0,4 »m pro 100 mm Durchmesser auf.

In bezug auf die Anordnung der Vertiefungen ist eine Ausführungsform der erfindungsgemäßen Gasdichtungsanordnung dadurch gekennzeichnet, daß die Vertiefungen an einem Umfang der Dichtungsstirnflächen beginnen und an einem Damm der Dichtungsstirnflächen enden, der aus dem vertiefungsfreien Teil der Dichtungsstirnflächen besteht. Die Vertiefungen können aber auch sowohl vom Innendurchmesser als auch vom Außendurchmesser der Dichtungsstirnflächen ausgehen und an einem vertiefungsfreien Damm enden. In diesem Fall kann die Ausführungsform mit Spiralrillen so eingerichtet sein, daß die Pumpwirkungen einander entgegengerichtet sind. Insbesondere bei der Ausführungsform mit Staukanten ist es vorteilhaft, die Vertiefungen an einem mäanderförmig verlaufenden Damm enden zu lassen. Im Rahmen der Erfindung liegt es, die Dichtungsstirnflächen mit einer Notlaufausrüstung zu versehen. Diese kann z. B. aus einer Auflage oder Beschichtung von einigen »m aus Graphit, Polytetrafluoräthylen od. dgl. bestehen. Sie kann aber auch aus in den Dichtungswerkstoff eingelagertem Kohlenstoff bestehen.

Von besonderer Bedeutung ist im Rahmen der Erfindung die Ausführungsform mit Staukanten an den Vertiefungen. In diesem Zusammenhang ist eine bevorzugte Ausführungsform der Erfindung dadurch gekennzeichnet, daß die Staukante der Vertiefungen in radialer Richtung verläuft. Die Staukante kann aber auch als kreisbogenförmiger Abschnitt von in der Draufsicht kreisförmigen Vertiefungen ausgeführt sein. Ein anderer Vorschlag der Erfindung geht dahin, die Staukante als Seitenkante von in der Draufsicht dreieckförmigen Vertiefungen auszuführen, deren Dreieckspitze am Umfangsrand gleichsam abgeschnitten ist. Stets empfiehlt es sich, die Anordnung so zu treffen, daß die Vertiefungen in bezug auf eine in radialer Richtung verlaufende Linie symmetrisch ausgeführt sind. Ist diese Symmetrie erfüllt, so arbeitet die erfindungsgemäße Gasdichtungsanordnung drehrichtungsunabhängig. Ist dieses nicht erforderlich oder nicht erwünscht, so können die Vertiefungen mit Staukante unsymmetrisch, z. B. L-förmig, gestaltet sein. Die Tiefe der Vertiefungen liegt im »m-Bereich.

Die erreichten Vorteile sind darin zu sehen, daß bei der erfindungsgemäßen Gasdichtungsanordnung die tribologischen Eigenschaften so kombiniert und die Vertiefungen so eingerichtet sind, daß die Erzeugung von die Verwindungsverformung rückstellenden Momenten aus der Druckverteilung im Dichtungsspalt nicht mehr erforderlich ist. Auf Vertiefungen, die eine ausgeprägte Pumpwirkung erzeugen, kann verzichtet werden und wird bei der Ausführungform mit Staukanten praktisch vollständig verzichtet, was die Leckrate beachtlich reduziert. Vergleicht man eine zum Stand der Technik gehörende gattungsgemäße Gasdichtungsanordnung bei sonst gleicher Auslegung für gleiche Betriebsverhältnisse mit einer erfindungsgemäßen Gasdichtungsanordnung, so läßt sich die Leckrate um zumindest 50 % reduzieren. Dazu trägt auch bei, daß die Dichtungsringe im Betrieb zwar eine Temperaturerhöhung erfahren, diese besitzt jedoch nach dem Einlaufen und daraus resultierendem Temperaturgleichgewicht einen so geringen Temperaturgradienten, daß schon aus diesem Grunde störende Verwindungsverformungen praktisch nicht auftreten. Das Temperaturgefälle in axialer Richtung liegt unter 1°C, während es bei den eingangs behandelten bekannten Ausführungsformen fast 20°C beträgt. Das gilt für alle üblichen Größen der Gasdichtungsanordnung, Wellendurchmesser z. B. 50 bis 250 mm, Gleitgeschwindigkeit bis 150 m/sek. Im übrigen verhindert das Flächenträgheitsmoment des Stator-Dichtungsringes die Verwindungsverformungen. Hinzu kommt, daß das geringe Porenvolumen und die geringe Oberflächenrauhigkeit in dem Bereich, in dem Vertiefungen nicht angeordnet sind, die Leckrate weiter reduzieren. Überraschenderweise bestehen auch keinerlei Einlaufprobleme und Auslaufprobleme. Letzteres hängt damit zusammen, daß bei der erfindungsgemäßen Dichtungsanordnung der Montageringspalt und der Funktionsringspalt zwischen Stator-Dichtungsring und zugeordnetem Zylinderteil des Gehäuses bei allen Betriebsbedingungen praktisch die gleiche Spaltdicke aufweisen. Diese ist so minimal, daß mit einem O-Ring verhältnismäßig geringer Werkstoffhärte gearbeitet werden kann, ohne daß selbst bei hohen Betriebsdifferenzdrücken Extrusionsgefahr besteht. Die erfindungsgemäßen Dichtungsanordnungen sind daher insbesondere als Hochdruckdichtungen geeignet und arbeiten stets mit großer Standzeit.

Im folgenden wird die Erfindung anhand einer lediglich ein Ausführungsbeispiel darstellenden Zeichnung ausführlicher erläutert. Es zeigen in schematischer Darstellung
- Fig. 1: einen Axialschnitt durch eine erfindungsgemäße Dichtungsanordnung im montierten Zustand,
- Fig. 2: eine Ansicht des Rotor-Dichtungsringes aus dem Gegenstand nach Fig. 1,
- Fig. 3 bis 7: andere Ausführungsformen des Gegenstandes der Fig. 2,
- Fig. 8: einen vergrößerten Ausschnitt aus Fig. 1 im Bereich der Dichtungsstirnflächen,
- Fig. 9: einen vergrößerten Ausschnitt aus Fig. 1 im Bereich des Funktionsspaltes.

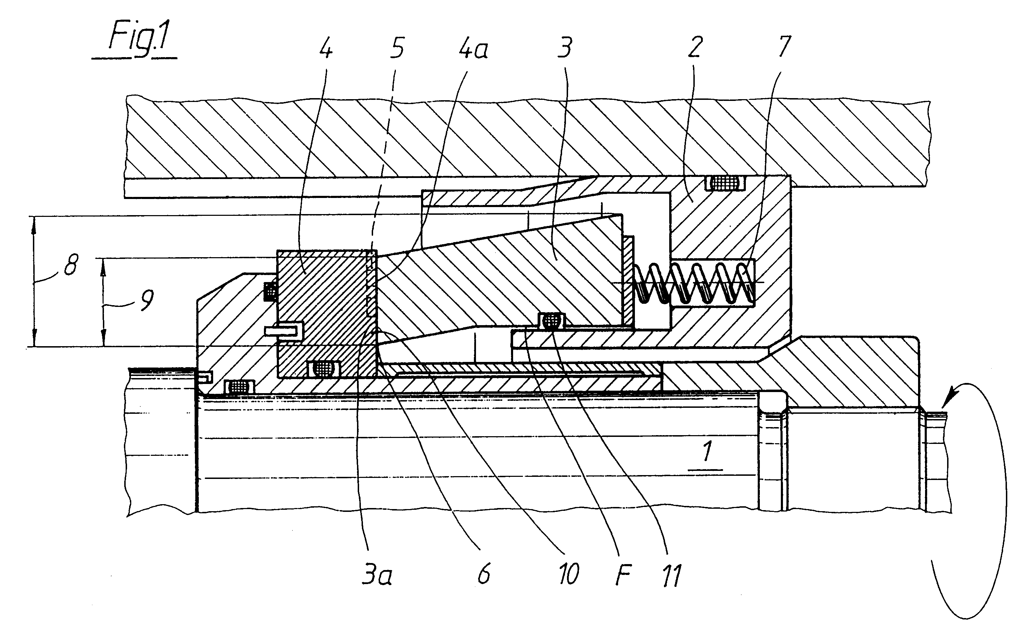

Die in den Fig. 1 bis 7 dargestellte Dichtungsanordnung für eine Welle 1 besteht in ihrem grundsätzlichen Aufbau aus einem Dichtungsgehäuse 2, einem in dem Dichtungsgehäuse 2 angeordneten Stator-Dichtungsring 3 und einem auf der Welle 1 angeordneten, wellenfesten Rotor-Dichtungsring 4. Die beiden Dichtungsringe 3, 4 arbeiten mit ihren Dichtungsstirnflächen 3a bzw. 4a, von denen im Ausführungsbeispiel die des Rotor-Dichtungsringes 4 zu einem Umfangsrand hin offene Vertiefungen 5 aufweist, gegeneinander mit einem Abstandsspalt bei 6, der aus Maßstabsgründen in Fig. 1 nicht erkennbar ist. Der Stator-Dichtungsring 3 arbeitet mit einer vorgegebenen Andrückkraft, die im Ausführungsbeispiel mit über den Umfang des Stator-Dichtungsringes 3 verteilten Federn 7 resultiert, in Richtung auf den Rotor-Dichtungsring 4. Der Stator-Dichtungsring 3, der eine Ringhöhe 8 aufweist, die größer ist als seine Dichtungsstirnflächenbreite 9, ist beweglich gelagert.

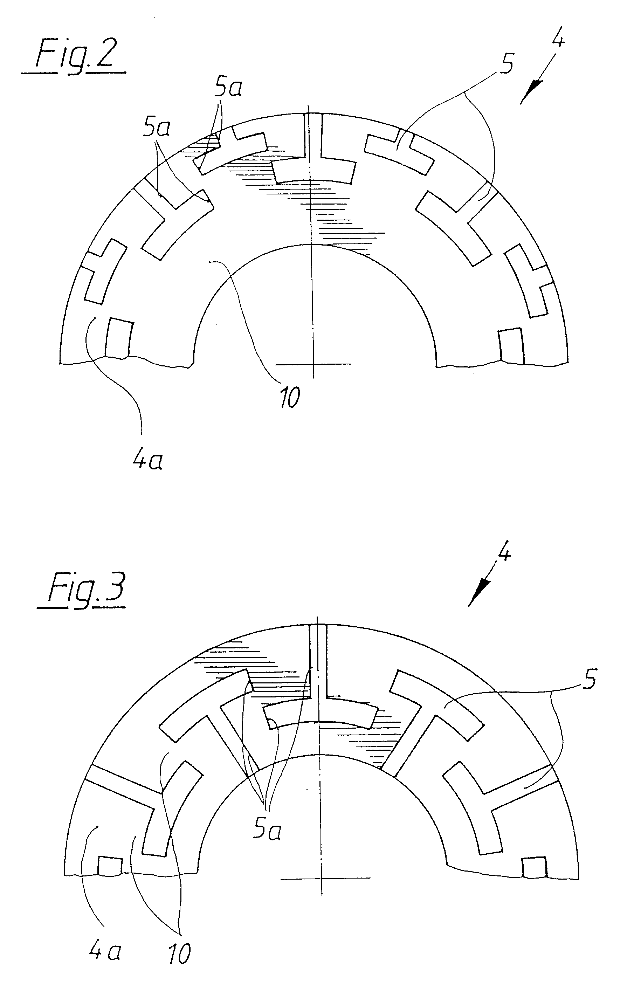

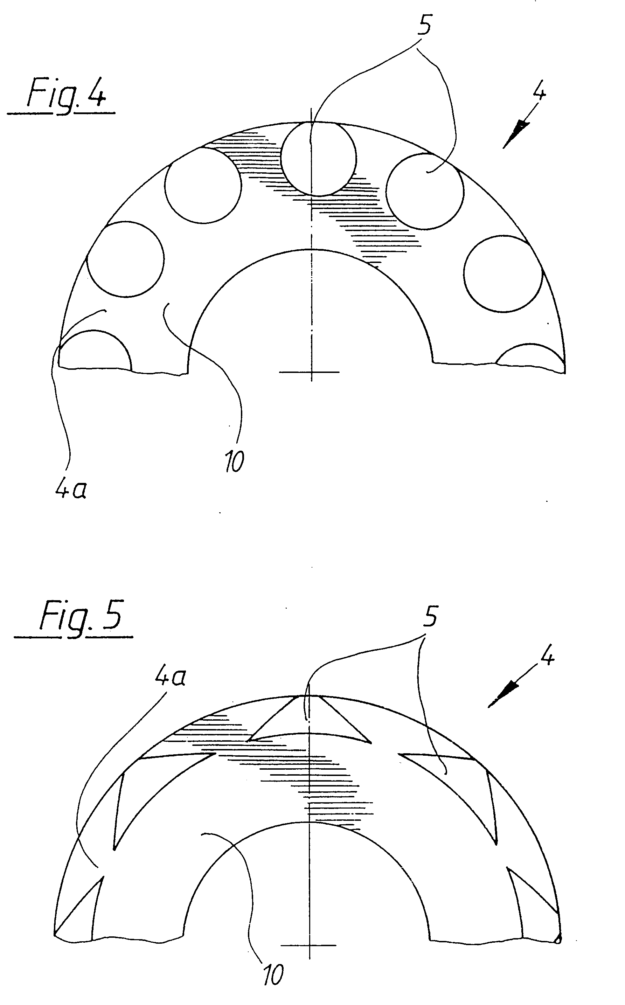

Die beiden Dichtungsringe 3, 4 bestehen aus einem Werkstoff hoher Wärmeleitfähigkeit sowie großen Elastizitätsmoduls mit großer Härte. Beide Dichtungsringe 3, 4 besitzen das vorstehend angegebene geringe Porenvolumen und die vorstehend angegebene geringe Oberflächenrauhigkeit. Der Stator-Dichtungsring 3 besitzt im übrigen ein axiales Flächenträgheitsmoment, welches temperaturbedingte Verwindungsverformungen seiner Dichtungsstirnfläche 3a verhindert. Das läßt der aus der Fig. 1 entnehmbare Querschnitt nachvollziehen. Die Vertiefungen 5, zu denen auf die Fig. 2 und 3 verwiesen wird, sind, ohne Rücksicht auf die Ausbildung von den Verwindungsverformungen entgegenwirkenden Momenten aus der Druckverteilung so ausgebildet und eingerichtet, daß die Leckrate minimiert wird. Das erreicht man wegen der Staukanten 5a, die einem Pumpeffekt entgegenwirken. In den Fig. 2 und 3 sind die Vertiefungen T-förmig mit radialen Staukanten 5a ausgeführt. In Fig. 4 sind die Vertiefungen 5 kreisförmig, in Fig. 5 dreieckförmig mit gleichsam abgeschnittener Spitze. Die Dichtungsringe 3. 4 bestehen aus einem der angegebenen Werkstoffe oder entsprechenden Paarungen.

Aus den Fig. 2 sowie 4 und 5 entnimmt man, daß die Vertiefungen 5 an einem Außenumfang der Dichtungsstirnfläche 4a beginnen und an einem Damm 10 der Dichtungsstirnfläche 4a enden, der aus dem vertiefungsfreien Teil der Dichtungsstirnfläche 4a besteht. Gemäß Fig. 3 beginnen die Vertiefungen 5 sowohl am Innendurchmesser als auch am Außendurchmesser der Dichtungsstirnfläche 4a. Sie enden an einem mittigen, vertiefungsfreien Damm 10. Der Damm 10 verläuft in Fig. 3 gleichsam mäanderförmig. Die Dichtungsstirnflächen 3a, 4a können eine Notlaufausrüstung geringer Dicke aus Graphit, Polytetrafluoräthylen od. dgl. tragen, was aus Maßstabsgründen nicht gezeichnet wurde.

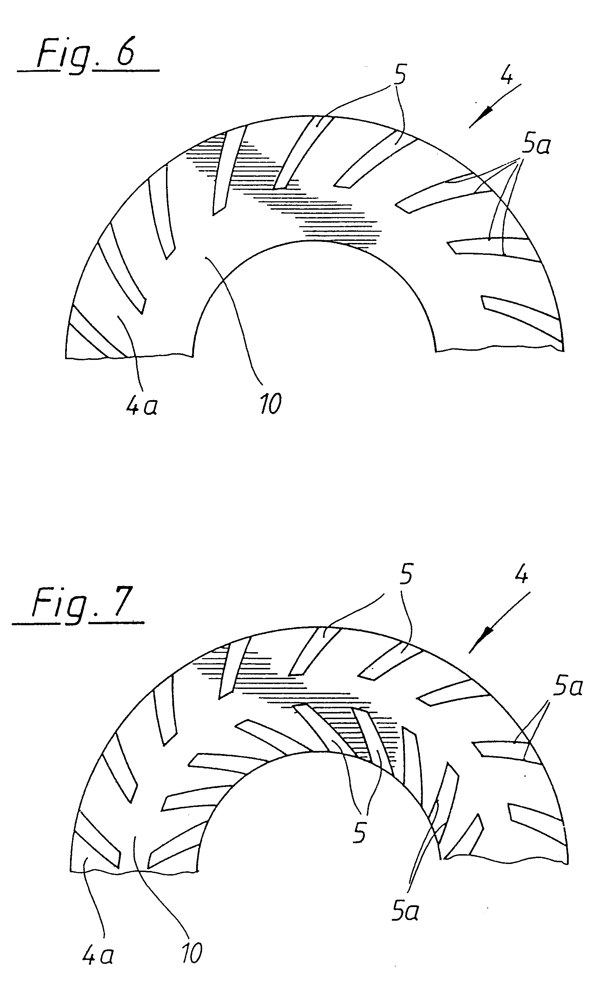

Bei der Ausführungsform nach den Fig. 6 und 7 sind die Vertiefungen 5 Spiralnuten. Im übrigen besteht Übereinstimmung mit der Ausführungsform nach den Fig. 2 und 3.

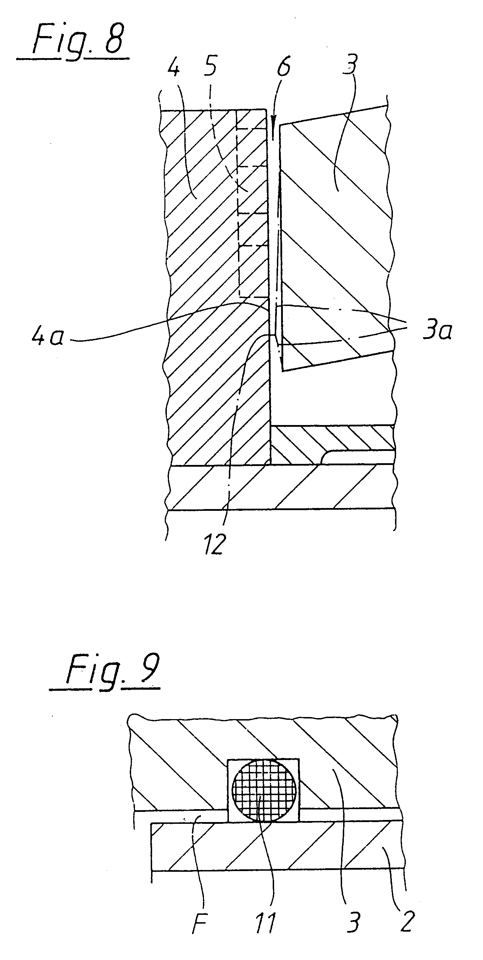

Die Fig. 8, die einen vergrößerten Ausschnitt aus der Fig. 1 darstellt, soll verdeutlichen, daß die beiden Dichtungsstirnflächen 3a, 4a sehr genau planparallel zueinander eingerichtet sind. Sie definieren im Betriebszustand einen Dichtspalt D, und zwar einen Starrspalt. Er wird im Betrieb durch die Gassperrung aufrechterhalten. In der Fig. 1 erkennt man den Funktionsringspalt F. Der Funktionsringspalt F, der sich im Betrieb einstellt, stimmt mit dem konstruktiv vorgegebenen Montageringspalt überein. Beide haben praktisch die gleiche Spaltdicke. Sie ist, bezogen auf den Radius, vorzugsweise gleich oder kleiner als 0,3 mm. Der Stator-Dichtungsring 3 ist unter allen Betriebsbedingungen verwindungsfrei ausgelegt. Der in Fig. 9 dargestellte vergrößerte Ausschnitt soll erkennbar machen, daß der O-Ring 11 sich in den Funktionsringspalt F, der die angegebene geringe Spaltdicke aufweist, auch bei hohen Betriebsdruckdifferenzen nicht hineindrücken kann, also nicht in diesen Funktionsringspalt F hineinextrudiert wird. Das beruht darauf, daß der Funktionsringspalt sehr klein ist. Nichtsdestoweniger kann der O-Ring 11 eine vergleichsweise kleine Werkstoffhärte aufweisen, so daß der beschriebene Ausgleich möglich ist. Die Erfindung erlaubt es, mit O-Ringen 11 zu arbeiten, die eine für die Orientierung der Dichtungsstirnflächen zueinander vorteilhafte Elastizität aufweisen. Die in der Fig. 1 erkennbare Andrückfeder 7 kann bespielsweise nach Art einer geschlossenen Balgfeder ausgeführt und zusätzlich als Zentrierelement eingesetzt sein.

Während bei der Ausführungsform nach den Fig. 1 bis 7 die Dichtungsstirnflächen 4a am Rotor-Dichtungsring 4 bzw. 3a am Stator-Dichtungsring 3 planparallel zueinander angeordnet sind, zeigt die Fig. 8 als Ausschnitt aus dem Gegenstand der Fig. 1 und vergrößert strichpunktiert eine Ausführungsform, bei der die Dichtungsstirnfläche 3a des Stator-Dichtungsringes 3 im Radialschnitt aus zwei Ringflächen besteht, die über eine Kante 12 aneinander angeschlossen sind. Im Ausführungsbeispiel sind diese Ringflächen schräg zueinander gestellt und bilden sie einen First. Sie könnten an dieser Stelle auch eine Stufe bilden.

Die Erfindung beruht auf der Erkenntnis, daß der Stator-Dichtungsring 3 so ausgelegt werden kann, daß er keine störenden temperaturbedingten Verwindungen oder sonstigen betriebsbedingten Verformungen erfährt. Das erlaubt es, einen sehr kleinen Montageringspalt und damit praktisch übereinstimmenden Funktionsringspalt F zu verwirklichen, der klein genug ist, um mit O-Ringen zu arbeiten, die selbst bei einem Betriebsdifferenzdruck von 300 oder sogar 500 bar nicht in den Ringspalt hineinextrudiert und dadurch vorzeitig zerstört werden. Im übrigen wird die beschriebene Ausgleichswirkung erreicht. Im Ergebnis zeichnet sich die erfindungsgemäße gasgesperrte Dichtungsanordnung dadurch aus, daß sie auch für hohe und sehr hohe Drücke geeignet ist und zwar mit minimaler Leckrate und sehr großer Standzeit.

## Patentansprüche

1. Gasgesperrte Gleitringdichtung für eine Welle (1), - mit
Dichtungsgehäuse (2),
in dem Dichtungsgehäuse (2) angeordnetem Stator-Dichtungsring (3) und
auf der Welle (1) angeordnetem, wellenfesten Rotor-Dichtungsring (4),
wobei die beiden Dichtungsringe (3, 4) mit ihren Dichtungsstirnflächen (3a, 4a) unter Zwischenschaltung der Gassperrung gegeneinander mit einem Dichtungsspalt (6) arbeiten, wobei der Rotor-Dichtungsring (4) und der Stator-Dichtungsring (3) aus einem der Werkstoffe der Gruppe "Wolframcarbid, Siliciumcarbid, Silicium/Siliciumcarbid-Compund, Titancarbid" oder Paarungen davon bestehen mit einem Porenvolumen von unter 1% sowie einer Oberflächenrauhigkeit von unter 0,3 »m (Ra), vorzugsweise von unter 0,03 »m (Ra) und wobei der Stator-Dichtungsring (3) gegenüber einem wellenseitigen Zylinderteil des Dichtungsgehäuses (2) im Betriebszustand und unter vorgegebenem Betriebsdifferenzdruck einen Funktionsringspalt (F) aufweist, der durch einen abdichtenden O-Ring (11) aus Gummi oder Kunststoff abgedichtet und mit einer durch zumindest eine Andrückfeder (7) vorgegebenen Andrückkraft gegen die Gassperrung gedrückt ist, **dadurch gekennzeichnet**, daß der Stator-Dichtungsring (3) ein so großes Flächenträgheitsmoment aufweist, daß die Spaltdicke des Funktionsringspaltes (F) zwischen dem wellenseitigen Zylinderteil des Dichtungsgehäuses (2) und dem Stator-Dichtungsring (3) im Betriebszustand und unter Betriebsdifferenzdruck mit der konstruktiv vorgegebenen Spaltdicke des Montageringspaltes zwischen Zylinderteil und Stator-Dichtungsring (3) in allen Betriebszuständen praktisch übereinstimmt und kleiner ist als 0,4 mm, vorzugsweise kleiner ist als 0,3 mm, und daß der abdichtende O-Ring (11) zusätzlich als Ausgleichszentierring für den Stator-Dichtungsring (3) ausgelegt ist und dazu eine Werkstoffhärte aufweist, die größer als der Extrusionsgrenzwert der Werkstoffhärte bei der angegebenen Spaltweite und dem vorgegebenen Betriebsdifferenzdruck und kleiner ist als die Werkstoffhärte von 90 Shore A nach DIN 53 505, vorzugsweise kleiner als 80 Shore A.

2. Dichtungsanordnung nach Anspruch 1, dadurch gekennzeichnet, daß der Rotor-Dichtungsring (4) Vertiefungen (5) aufweist, welche förderwirksame Spiralrillen sind.

3. Dichtungsanordnung nach Anspruch 2, dadurch gekennzeichnet, daß die Vertiefungen (5) druckwirksame Einsenkungen mit Staukante (5a) sind.

4. Dichtungsanordnung nach einem der Ansprüche 1 bis 3, dadurch gekennzeichnet, daß die Dichtungsstirnflächen (3a, 4a) des Stator-Dichtungsringes (3) sowie des Rotor-Dichtungsringes (4) bei Zimmertemperatur und bei einem Temperaturgradienten von Null eine Ebenheit von 0,4 »m pro 100 mm Durchmesser aufweisen.

5. Dichtungsanordnung nach einem der Ansprüche 1 bis 4, dadurch gekennzeichnet, daß der Stator-Dichtungsring (3) sowie der Rotor-Dichtungsring (4) ein Porenvolumen von unter 0,5 % aufweisen.

6. Dichtungsanordnung nach einem der Ansprüche 1 bis 5, dadurch gekennzeichnet, daß der Stator-Dichtungsring (3) einen Ringquerschnitt aufweist, dessen Ringhöhe (8) in axialer Richtung zumindest dem Zweifachen der Ringbreite (9) entspricht.

7. Dichtungsanordnung nach einem der Ansprüche 2 bis 6, dadurch gekennzeichnet, daß die Vertiefungen (5) an einem Umfang der Dichtungsstirnflächen (4a) beginnen und an einem Damm (10) der Dichtungsstirnflächen (4a) enden, der aus einem spiralrillenfreien Teil der Dichtungsstirnflächen (4a) besteht.

8. Dichtungsanordnung nach einem der Ansprüche 1 bis 7, dadurch gekennzeichnet, daß die Dichtungsstirnfläche (3a) des Stator-Dichtungsringes (3) im Radialschnitt aus mindestens zwei Ringflächen besteht, die über eine Kante (12) aneinander angeschlossen sind.

9. Dichtungsanordnung nach einem der Ansprüche 1 bis 8, dadurch gekennzeichnet, daß die Dichtungsstirnfläche (3a) des Stator-Dichtungsringes (3) im Radialschnitt aus zwei schräggestellten Ringflächen besteht, die unter der Bildung eines Firstes oder einer Stufe aneinander angeschlossen sind.

10. Dichtungsanordnung nach einem der Ansprüche 1 bis 9, dadurch gekennzeichnet, daß die Dichtungsstirnfläche (3a) des Stator-Dichtungsringes (3) und die des Rotor-Dichtungsringes (4) in allen Betriebszuständen zueinander die gleiche Orientierung aufweisen, vorzugsweise zueinander parallel verlaufen.

## Claims

1. A gas-sealed rotating mechanical seal for a shaft (1), - with
a seal housing (2),
a stator sealing ring (3) disposed in the seal housing (2) and
a rotor sealing ring (4) disposed on the shaft (1) and fixed to the shaft,
wherein the two sealing rings (3, 4) act against each other with their sealing end faces (3a, 4a) with the gas seal interposed therebetween and with a seal gap (6), wherein the rotor sealing ring (4) and the stator sealing ring (3) consist of one of the materials of the group comprising tungsten carbide, silicon carbide, silicon/silicon carbide compound or titanium carbide, or combinations thereof, with a pore volume less than 1% and a surface roughness less than 0.3 »m (Ra), preferably less than 0.03 »m (Ra), and wherein, in the operating state and under a predetermined operating differential pressure, the stator sealing ring (3) has an operational annular gap (F) in relation to a cylindrical part of the seal housing (2) on the shaft side, which operational annular gap is sealed by a sealing O-ring (11) made of rubber or plastic and is pressed against the gas seal with a contact pressure which is predetermined by at least one contact pressure spring (7), characterised in that the stator sealing ring (3) has a geometrical moment of inertia which is of sufficient magnitude such that in the operating state and under the operating differential pressure the gap thickness of the operational annular gap (F) between the cylindrical part of the seal housing (2) on the shaft side and the stator sealing ring (3) practically corresponds to the structurally predetermined gap thickness of the annular assembly gap between the cylindrical part and the stator sealing ring (3) in all operating situations and is less than 0.4 mm, preferably less than 0.3 mm, and that the sealing O-ring (11) is designed in addition as a compensating centring ring for the stator sealing ring (3) and for this purpose has a material hardness which is greater than the extrusion limit of the material hardness at the given gap width and at the predetermined operating differential pressure and is less than the material hardness of 90 Shore A according to DIN 53 505, preferably less than 80 Shore A.

2. A seal arrangement according to claim 1, characterised in that the rotor sealing ring (4) has recesses (5) which are transport-effecting helical grooves.

3. A seal arrangement according to claim 2, characterised in that the recesses (5) are pressure-effecting hollows with a hold-up edge (5a).

4. A seal arrangement according to any one of claims 1 to 3, characterised in that the sealing end faces (3a, 4a) of the stator sealing ring (3) and of the rotor sealing ring (4) have a flatness of 0.4 »m per 100 mm diameter at room temperature and at a temperature gradient of zero.

5. A seal arrangement according to any one of claims 1 to 4, characterised in that the stator sealing ring (3) and the rotor sealing ring (4) have a pore volume less than 0.5 %.

6. A seal arrangement according to any one of claims 1 to 5, characterised in that the stator sealing ring (3) has a ring cross-section, the ring height (8) of which in the axial direction corresponds at least to twice the ring width (9).

7. A seal arrangement according to any one of claims 2 to 6, characterised in that the recesses (5) start at a periphery of the sealing end faces (4a) and end at an embankment (10) on the sealing ring end faces (4a) which consists of a part of the sealing ring end faces (4a) which is free from helical grooves.

8. A seal arrangement according to any one of claims 1 to 7, characterised in that in radial section the sealing end face (3a) of the stator sealing ring (3) consists of at least two ring faces which are joined to each other via an edge (12).

9. A seal arrangement according to any one of claims 1 to 8, characterised in that in radial section the sealing end face (3a) of the stator sealing ring (3) consists of two inclined ring faces which are joined to each other with the formation of a ridge or a step.

10. A seal arrangement according to any one of claims 1 to 9, characterised in that the sealing end face (3a) of the stator sealing ring (3) and that of the rotor sealing ring (4) have the same orientation with respect to each other, and preferably extend parallel to each other, in all operating situations.

## Revendications

1. Dispositif d'étanchéité coulissant, étanche au gaz, pour un arbre (1), comportant
un boîtier (2) pour le dispositif d'étanchéité,
une bague d'étanchéité de stator (3) disposée dans le boîtier (2) du dispositif d'étanchéité, et
une bague d'étanchéité de rotor (4) montée sur l'arbre (1) et solidaire de ce dernier, et
dans laquelle les deux bagues d'étanchéité (3, 4) travaillent par leurs faces frontales d'étanchéité (3a, 4a) placées l'une contre l'autre moyennant l'insertion intercalée du dispositif d'étanchéité au gaz, avec une fente d'étanchéité (6), la bague d'étanchéité de rotor (4) et la bague d'étanchéité de stator (3) sont réalisées en l'un des matériaux du groupe "carbure de tungstène, carbure de silicium, matériau composite silicium/carbure de silicium, carbure de titane" ou des couples de tels matériaux, avec un volume de pores inférieur à 1 % et une rugosité de surface inférieure à 0,3 »m (Ra), et, lorsqu'elle est dans l'état de fonctionnement et soumise à une pression différentielle de fonctionnement prédéterminée, de préférence inférieure à 0,3 »m (Ra), et la bague d'étanchéité de stator (3) délimite avec la partie cylindrique, située du côté de l'arbre, du boîtier (2) du dispositif d'étanchéité, une fente annulaire de fonctionnement (F), cette fente annulaire étant fermée de façon étanche par une bague torique d'étanchéité (11) réalisée en caoutchouc ou en une matière plastique, et étant repoussée contre le dispositif d'étanchéité au gaz avec une force de serrage prédéterminée par au moins un ressort de serrage (7), caractérisé en ce que la bague d'étanchéité de stator (3) possède un moment d'inertie géométrique suffisamment élevé pour que la largeur de la fente annulaire de fonctionnement (F) entre la partie cylindrique, située côté arbre, du boîtier (2) du dispositif d'étanchéité et la bague d'étanchéité de stator (3) dont l'état de fonctionnement est sous une pression différentielle coïncide pratiquement, dans tous les états de fonctionnement, avec l'épaisseur, prévue par construction, de la fente annulaire de montage entre la partie cylindrique et la bague d'étanchéité de stator (3), et est inférieure à 0,4 mm et de préférence est inférieure à 0,3 mm, tandis que la bague torique d'étanchéité (11) est conçue en supplément en tant que bague de centrage de compensation pour la bague d'étanchéité de stator (3) et est réalisée à cet effet en un matériau ayant une dureté qui est supérieure à la valeur limite d'extrusion de la dureté du matériau pour la largeur de fente indiquée et la pression différentielle de fonctionnement prédéterminée et est inférieure à la dureté 90 Shore A selon DIN 53 505 et est de préférence inférieure à 80 Shore A.

2. Dispositif d'étanchéité selon la revendication 1, caractérisé en ce que la bague d'étanchéité de rotor (4) comporte des renfoncements (5) qui sont des rainures spiralées ayant un effet d'entraînement.

3. Dispositif d'étanchéité selon la revendication 2, caractérisé en ce que les renfoncements (5) sont des évidements, actifs du point de vue pression et comportant un bord d'accumulation (5a).

4. Dispositif d'étanchéité selon l'une des revendications 1 à 3, caractérisé en ce que les surfaces frontales d'étanchéité (3a, 4a) de la bague d'étanchéité de stator (3) ainsi que la bague d'étanchéité de rotor (4) possèdent, à la température ambiante et pour un gradient de température nul, une planéité de 0,4 »m/100 mm de diamètre.

5. Dispositif d'étanchéité selon l'une des revendications 1 à 4, caractérisé en ce que la bague d'étanchéité de stator (3) ainsi que la bague d'étanchéité de rotor (4) possèdent un volume de pores inférieur à 0,5 %.

6. Dispositif d'étanchéité selon l'une des revendications 1 à 5, caractérisé en ce que la bague d'étanchéité de stator (3) possède une section transversale annulaire, dont la hauteur (8) dans la direction axiale correspond au moins au double de la largeur (9).

7. Dispositif d'étanchéité selon l'une des revendications 2 à 6, caractérisé en ce que les renfoncements (5) commencent dans la périphérie des surfaces frontales d'étanchéité (4a) et se terminent au niveau d'un rebord de retenue (10) des surfaces frontales d'étanchéité (4a), qui est constitué par une partie, ne comportant aucune rainure spiralée, des surfaces frontales d'étanchéité (4a).

8. Dispositif d'étanchéité selon l'une des revendications 1 à 7, caractérisé en ce que la surface frontale d'étanchéité (3a) de la bague d'étanchéité de stator (3) est constituée, en coupe radiale, par au moins deux surfaces annulaires, qui sont raccordées l'une à l'autre par l'intermédiaire d'un bord (12).

9. Dispositif d'étanchéité selon l'une des revendications 1 à 8, caractérisé en ce que la surface frontale d'étanchéité (3a) de la bague d'étanchéité de stator (3) est constituée, en coupe radiale, par deux surfaces annulaires obliques, qui sont raccordées entre elles en formant un toit ou une partie étagée.

10. Dispositif d'étanchéité selon l'une des revendications 1 à 9, caractérisé en ce que la surface frontale d'étanchéité (3a) de la bague d'étanchéité de stator (3) et celle de la bague d'étanchéité de rotor (4) possèdent, dans tous les états de fonctionnement, la même orientation réciproque et de préférence sont parallèles entre elles.
